# EUROPÄISCHE PATENTSCHRIFT

(11) **EP 4 350 190 B1**
(45) Veröffentlichungstag und Bekanntmachung des Hinweises auf die Patenterteilung: **25.12.2024**
(21) Anmeldenummer: 23198948.4
(22) Anmeldetag: 21.09.2023
(51) Int. Cl.: F16L 37/248, B01L 3/00

(54) **SCHLAUCHKUPPLUNG UND VERFAHREN ZUR VERWENDUNG IN ANALYSE- SYSTEMEN**
HOSE COUPLING AND METHOD FOR USE IN ANALYTICAL SYSTEMS
RACCORD DE TUYAU ET PROCÉDÉ D'UTILISATION DANS DES SYSTÈMES ANALYTIQUES

(30) Priorität: 05.10.2022 LU 103026
(43) Veröffentlichungstag der Anmeldung: 10.04.2024
(73) Patentinhaber: Stratec SE, 75217 Birkenfeld (DE)
(72) Erfinder: Zver, Martin, 75217 Birkenfeld (DE)
(74) Vertreter: Tegethoff, Sebastian

(56) Entgegenhaltungen:
- WO-A2-2019/234261
- DE-A1- 102017 102 052
- DE-T2- 69 928 827
- US-A- 6 095 572
- US-B2- 9 839 912

## Beschreibung

### GEBIET DER ERFINDUNG

Die Erfindung betrifft eine Schlauchkupplung zur Verwendung in Analysesystemen sowie ein Verfahren zur Verwendung dersleben.

### HINTERGRUND DER ERFINDUNG

Automatisierte Analysesysteme für den Einsatz in der klinischen Diagnostik und den Biowissenschaften werden von einer Reihe von Unternehmen hergestellt. STRATEC^{®} SE, Birkenfeld, Deutschland, stellt beispielsweise eine Reihe von Geräten zur Probenhandhabung und -erkennung her, die in automatisierten Analysensystemen und anderen Laborinstrumenten verwendet werden.

Die häufigste Art der Verbindung von Schläuchen, die Flüssigkeiten übertragen, sind Schraubkupplungen. Die zu verbindenden Teile bestehen in der Regel aus Fluorpolymeren wie PTFE oder FEP, insbesondere im Bereich der Analyse- und Medizintechnik. Diese Werkstoffe sind medienbeständig und druckfest. Aufgrund ihres starken Kriechverhaltens und ihrer relativ hohen Härte können diese Schläuche nicht einfach zum Verbinden zusammengesteckt werden. Für derartige Kupplungen werden spezielle Verschraubungen verwendet.

Das Ende eines Rohrs oder Schlauchs wird umgeformt, oder es wird ein Flansch an seinem Ende mit Hilfe von Hitze und Druck geformt, um eine dichte Verbindung zwischen der Armatur und ihrem Gegenstück zu erhalten. Ein solcher geformter Flansch dichtet zwischen der Vorderseite der Armatur und dem Gewindegrund des Gegenstücks ab. Zwischen Flansch und Fitting kann ein Ring zur Entkopplung von Torsionskräften angeordnet werden, die beim Anziehen von Fitting und Gegenstück auftreten können.

Ein Nachteil dieser Methode ist, dass der Prozess der Flanschumformung eine Reihe von Hilfsmitteln oder Werkzeugen erfordert. Zum einen wird eine Haltevorrichtung für den Schlauch benötigt und zum anderen das eigentliche Umformwerkzeug. Häufig wird ein beheizter Dorn verwendet, der das Rohr vor dem Umformen erwärmt. Außerdem werden gerade bei dieser Art von Verschraubungen oft zerspante Einzelteile aus Materialien wie PEEK verwendet. Insbesondere die Montage und die Teilefertigung machen diese Art der Verbindung auf wendig. Außerdem erfordert die Herstellung einer solchen Schlauchverbindung eine gewisse Erfahrung in der Montage und ist daher nicht sehr benutzerfreundlich. Die Methode gilt nur für harte Fluorpolymerschläuche. Thermoplastische Elastomere können aufgrund ihrer Elastizität und geringeren Shore-Härte nicht mit der erforderlichen Präzision umgeformt werden.

Eine Alternative zur Umformung des Rohr- oder Schlauchendes ist ein Einsatz, der aus einer Dichtung mit zylindrischem Schlauchanschluss und einem Ring zur rotatorischen Entkopplung besteht. Zur Montage wird die Verschraubung über das Rohr oder den Schlauch geschoben, dann folgt der Ring und schließlich wird der Einsatz in das Rohr oder den Schlauch eingeführt.

Ähnlich wie bei der Verbindung mit dem Formschlauch können bei diesem Verfahren oft rein spanend hergestellte Kleinteile aus hochwertigen Kunststoffen verwendet werden. Der Dichtungsflansch besteht aus einer Scheibe mit einem Dorn. Dieser Dorn wird mit leichtem Überstand in den Schlauch eingesetzt. Aufgrund der hohen Härte des Schlauches und der geringen Größe der Bauteile führt dies zu einem erhöhten Aufwand bei der Montage. Durch das Einschieben des Dorns in den Schlauch wird dessen Querschnitt verringert, was zu einem Strömungswiderstand im System führt. Je nach Durchflussmenge wird die Flüssigkeit vor dem Dorn komprimiert und erfährt hinter der Querschnittsverringerung eine Expansion, was zu unerwünschten Turbulenzen führen kann.

Eine weitere Möglichkeit der Abdichtung ist die Verwendung einer Elastomerdichtung, die über das Schlauchende gestülpt wird, so dass die Abdichtung an der Außenseite des Schlauches erfolgt. Bei dieser Variante wird die Dichtheit zum Schlauch und der eigentliche Dichtsitz im Gegenstück nur durch ein elastomeres Element hergestellt. Gerade die Dichtheit zum Gegenstück ist somit immer von der Montage abhängig. Wird das Dichtungsteil zu weit auf den Schlauch geschoben, besteht keine Verbindung zwischen dem Elastomer und dem Gegenstück. Die Dichtheit ist somit nicht mehr gegeben. Die Montage ist zum einen wegen der vorgegebenen Toleranzproblematik und zum anderen wegen der erforderlichen Montagekräfte schwierig. Es wird empfohlen, eine Montagevorrichtung zu verwenden. Dies erhöht den Aufwand und damit die Kosten. Wie bei den vorgenannten Methoden ist diese Verbindungstechnik auf die eher harten Fluorpolymerschläuche beschränkt. Ein Aufschieben des Verbinders auf weichere Schläuche würde dessen Querschnitt verringern. Außerdem ist es fraglich, ob sich der Dichtungsteil aufgrund der höheren Reibwerte überhaupt verschieben kann.

Eine sehr einfache Methode zum Verbinden von Schläuchen mit einer Shore-Härte unter 85 A ist die Verwendung eines so genannten Widerhakenverbinders, bei dem der Schlauch über einen Dorn mit einem größeren Außendurchmesser als dem Innendurchmesser des Schlauches gestülpt wird. Um eine sichere Verbindung zu gewährleisten, muss der Dorn pilzförmig sein. Dies ist die gebräuchlichste, werkzeuglose Art, Schläuche zu verbinden. Sie ist weit verbreitet, wenn es um den Flüssigkeitstransport im Niederdruckbereich geht. Der Schlauch wird nur über das Gegenstück gestülpt. Der dadurch entstehende, zum Teil mehrfache Leitungskontakt zwischen Armatur und Schlauch gewährleistet die Dichtheit zwischen den beiden Partnern. Allerdings hat gerade dieses Überstülpen auch einige Nachteile. Zum einen ist je nach Härte des Schlauches und dem gewählten Überstand zwischen Armatur und Schlauch die Montage schwierig. Mit zunehmendem Überstand bzw. zunehmender Härte nehmen die Kontaktkräfte, die in der Regel manuell aufgebracht werden, stark zu. Um dem entgegenzuwirken, kann der Überstand mit zunehmender Schlauchhärte oder Wandstärke reduziert werden. Mit abnehmendem Überstand nimmt jedoch auch die Druckfestigkeit der Gesamtverbindung ab. Bei Druckanwendungen und dem Einsatz von stark pulsierenden Pumpen kann diese Verbindung eine undefinierte Instabilität aufweisen. Die Armatur wird in ein Gegenstück geschraubt. Wird der Schlauch vor dem Einschrauben der Armatur in das Gegenstück mit der Armatur verbunden, kann sich die Verbindung aufgrund von Spannungen in den Schläuchen, die durch Verdrehen entstehen, lösen.

Für ein schnelles Verbinden und Lösen wird in medizinischen Geräten sehr häufig ein Luer-Lock verwendet. Eine solche Verbindung basiert auf zwei Kupplungsstücken, die nur durch einen selbstsichernden Konus verbunden und abgedichtet werden. Bei der Luer-Lock-Variante ergibt sich durch ein Außengewinde, das durch eine 90° - Drehung verschlossen werden kann, ein zusätzlicher Anpressdruck, der ein Auseinanderziehen der konischen Verbindung und damit Undichtigkeiten verhindert. Ein Nachteil eines Luer-Locks ist, dass die Partner des Locks gegeneinander verdreht werden mit der Folge, dass der Schlauch in seinem elastischen Bereich verdreht wird. Dies kann unter Umständen dazu führen, dass sich die Verbindung aufgrund der Elastizität des Schlauches lockert und es zu Undichtigkeiten kommen kann.

Um genau dieses Verdrehen des Schlauches zu verhindern, kann dieser durch eine 90°-Drehung gegen die Schließrichtung des Gewindes vorgespannt werden. Dies hat den Vorteil, dass der Schlauch beim Schließen der Kupplung spannungsfrei ist. Allerdings erfordert diese Vorspannung einen aufmerksamen Benutzer, die Fehlerquote ist entsprechend hoch. Um diesem Problem entgegenzuwirken, gibt es eine drehentkoppelte Variante. In diesem Fall ist das Sicherungsgewinde als zusätzliche Überwurfmutter mit dem eigentlichen Luer-Konus lose verbunden. Soll die Kupplung nun geschlossen werden, kann das Gegenstück lediglich angesetzt werden. Durch das Anziehen der drehentkoppelten Überwurfmutter wird der eigentlich Konus, welcher mit dem Schlauch verbunden ist, ohne Eigendrehung in den Konus des Gegenstücks eingepresst.

Das Verschlussgewinde der Luer-Lock-Kupplung ist für eine ergonomisch komfortable ¼-Drehung ausgelegt. Um in diesen nur 90 ° Drehwinkel ausreichend zu realisieren, um den Kupplungspartner von lose zu fest zu verbinden, ist eine recht große Steigung erforderlich. Diese große Gewindesteigung reduziert die Selbsthemmung des Gewindes auf ein deutlich niedriges Niveau. Dies hat zur Folge, dass dieses Sicherungsgewinde nur bei einem fest verbundenen Luer-Konus zuverlässig verriegelt und diese Verriegelung auch hält. Bei der beschriebenen drehentkoppelten Variante ist die Reibung der Luer-Kegel aufgehoben. Die drehentkoppelte Überwurfmutter kann sich nur durch die Adhäsion zwischen Schrauben- und Muttergewinde verklemmen (Selbsthemmung). Da diese jedoch durch die große Steigung reduziert wird, besteht immer die Gefahr eines selbständigen Lösens des Sicherungsgewindes. In diesem Fall besteht die Haltekraft nur aus den beiden eingesetzten Luer-Kegeln. Bei dynamisch belasteten Systemen, schwingenden oder vibrierenden Verbindungen sowie Verbindungen, die starken Temperaturschwankungen ausgesetzt sind, kann diese Art der Kupplung daher sehr schnell zu Fehlern führen.

Die veröffentlichte US-Patentanmeldung Nr. US 2018/0128405 A1 bezieht sich auf eine einfachwirkende Push-to-Connect-Verschraubung für eine Leitung, wie z. B. ein Rohr oder einen Schlauch. Die Verschraubung umfasst eine erste Verschraubungskomponente und eine zweite Verschraubungskomponente, die miteinander verbunden oder zusammengebaut sind, um eine Verschraubungsbaugruppe zu bilden. Die Fittingbaugruppe umfasst eine Rohrdichtungsvorrichtung und eine Rohrhaltevorrichtung. Eine Leitung kann manuell oder auf andere Weise mit einer einzigen axialen Bewegung in die zusammengesetzte Verschraubungsbaugruppe eingeführt und gehalten und abgedichtet werden, ohne dass eine weitere Aktion oder Bewegung der Verschraubungskomponenten erforderlich ist. Ein Nachteil einer Verschraubungsbaugruppe gemäß dieser Veröffentlichung ist, dass sie aus mehreren Teilen besteht, was ihre Montage kompliziert macht.

Die veröffentlichte US-Patentanmeldung Nr. US 2019/0128460 A1 bezieht sich auf eine Schlauchendform mit einem ersten Abschnitt, der eine erste radial nach außen weisende Oberfläche aufweist, und einer Schulter, die axial zwischen dem ersten und dem zweiten Abschnitt angeordnet ist, wobei die Schulter eine erste kegelstumpfförmige Oberfläche aufweist, die unter einem ersten Winkel relativ zu der ersten radial nach außen weisenden Oberfläche angeordnet ist, und eine zweite kegelstumpfförmige Oberfläche, die unter einem zweiten Winkel relativ zu der ersten radial nach außen weisenden Oberfläche angeordnet ist. Dieses Dokument bezieht sich nicht auf einen Verbinder, der geeignet ist, einen Schlauch zu dessen Befestigung in dem Verbinder aufzunehmen.

Das veröffentlichte U.S. Patent US 6,095,572 A offenbart eine Schnellverbindungsbaugruppe mit Vierteldrehung zum Verbinden von Miniatur-Fluidleitungen, beispielsweise Schläuchen, umfassend ein erstes Anschlussstück mit radial vorstehenden Stiften und ein zweites Anschlussstück, das sich in einer drehbaren Vierteldrehungsmutter befindet mit spiralförmigen Nuten, die die Stifte aufnehmen. Das erste Anschlussstück definiert einen zentralen Durchgang und das zweite Anschlussstück definiert einen zentralen Durchgang, die jeweils so konfiguriert sein können, dass sie einen Hohlrohrsatz verschiebbar aufnehmen oder ein passendes Anschlussstück mit Außengewinde schraubbar aufnehmen können. Der Schnellanschluss mit Vierteldrehung kann so konfiguriert werden, dass er am Ende einer Säule angebracht wird, und kann einen Adapter umfassen, der eine Schutzsäule aufnimmt, oder eine Fritte zum Filtern der durch das Viertel strömenden Flüssigkeit Drehen Sie die Schnellverbindungsbaugruppe. Der Schnellanschluss mit Vierteldrehung wird zusammengebaut, indem die Stifte des ersten Fittings in die Nuten der Vierteldrehungsmutter geschoben und die Vierteldrehungsmutter um etwa 90 Grad gegenüber dem ersten Fitting gedreht werden, wodurch die Stifte sicher in den definierten Winkelbereichen sitzen an den Enden der Rillen.

Die veröffentlichte internationale Patentanmeldung WO 2019/234261 A2 offenbart ein Verfahren zur Verbindung eines Absaugschlauchs für Körperflüssigkeiten mit einem Behälter mit den Schritten - Bereitstellen eines an einem Schlauchabschnitt angeordneten Schlauchadapters, einer Dichtung mit mindestens einer ringförmigen Dichtfläche und eines Behälters, an dem ein Schlauchadapter-Gegenstück angeordnet ist, - Herstellen eines mechanischen Kontakts zwischen einer ersten Anlagefläche, die am Schlauchadapter vorgesehen ist, der Dichtung mit mindestens einer ringförmigen Dichtfläche und einer zweiten Anlagefläche, die am Schlauchadapter-Gegenstück vorgesehen ist, in einer ersten Orientierung des Schlauchadapters relativ zum Schlauchadapter-Gegenstück, und - Rotieren des Schlauchadapters aus der ersten Orientierung in eine zweite Orientierung, so dass durch eine Wechselwirkung zwischen Abschnitten des Schlauchadapters und Abschnitten des Schlauchadapter-Gegenstücks die Dichtung mit mindestens einer ringförmigen Dichtfläche zwischen der ersten Anlagefläche und der zweiten Anlagefläche eingequetscht wird sowie ein Absaugschlauch für ein solches Verfahren und ein dabei einsetzbarer Schlauch-Schnellverbinder.

Die veröffentlichte Internationale Patentanmeldung WO 00/25844 A1 offenbart eine verbesserte Pumpe zur kontrollierten Abgabe von Fluiden, wobei die Pumpe einen Behälter und einen beweglichen Kolben umfasst. Ein Kolbenschieber steht in lösbarem Kontakt mit dem beweglichen Kolben. Ein Motor ist mit einem Antriebselement, z. B. einer Antriebsspindel, betriebsbereit gekoppelt. Der Motor ist in Reihe mit dem Antriebselement und dem Plungerschieber angeordnet. Das Antriebselement ist funktionsfähig mit dem Kolbenschieber verbunden und so angeordnet, dass es im Wesentlichen von dem Kolbenschieber umschlossen wird, wenn sich der Kolbenschieber in mindestens einer Position befindet. Das Antriebselement ist so beschaffen, dass es den Stößelschieber in Reaktion auf den Betrieb des Motors vorwärts bewegt.

Das veröffentlichte U.S. Patent US 9,839912 B2 offenbart ein Analysegerät zur automatisierten Bestimmung einer Messgröße einer Flüssigkeitsprobe, umfassend: ein Basismodul; eine austauschbare Kassette, die mit dem Basismodul verbindbar ist und mindestens einen Flüssigkeitsbehälter aufweist, der über eine Flüssigkeitsleitung mit einer Messzelle verbindbar ist und ein der Flüssigkeitsprobe zuzusetzendes Reagenz zur Bildung einer Messflüssigkeit enthält; und einen Messumformer zur Erfassung von mit der Messgröße korrelierten Messwerten für die in der Messzelle aufgenommene Messflüssigkeit. Die Kassette weist eine dem mindestens einen Flüssigkeitsbehälter zugeordnete Fluidkopplungsvorrichtung mit einem Primärteil und einem Sekundärteil auf, die zur Herstellung einer Verbindung der Fluidleitung mit dem Flüssigkeitsbehälter dient.

Die veröffentlichte deutsche Patentanmeldung DE 10 2017 102 052 A1 offenbart eine Steckverbindungsanordnung zum lösbaren Verbinden eines Steckverbinders einer Hydraulikleitung mit einem Anschluss eines hydraulischen Systems und ein Verfahren hierzu. An einem freien Ende des Anschlusses ist eine Aufnahme ausgebildet, die mindestens zwei Haken aufweist. Eine Kurvenstruktur der Haken wirkt im verbundenen Zustand aus Anschluss und dem Steckverbinder mit jeweils einem flexiblen Clip des Steckverbinders zusammen. Eine jeweils starre Lasche des Steckverbinders hintergreift dann auch jeden Haken des Anschlusses.

### KURZE BESCHREIBUNG DER ERFINDUNG

Die vorlegende Erfindung stellt eine Schlauchkupplung für eine fluidische Verbindung in einem Analysesystem zur Verfügung, umfassend
- einen Stecker
   - eine Muffe, welche einen ersten Hohlzylinder umfasst, dessen Kanal an einem Ende mit einem Schlauch verbunden ist und dessen anderes Ende eine erste Öffnung zur Aufnahme des Steckers umfasst, wobei das Ende zur Aufnahme des Steckers zumindest teilweise von einem Sicherungsring mit einer Ausnehmung umgeben ist, wobei sich die erste Öffnung der Muffe zur Aufnahme des Steckers an einer Seite in eine zweite Öffnung erstreckt, welche sich als entlang des Radius des ersten Hohlzylinders der Muffe verlaufender Kanal fortsetzt; und
   - den Stecker mit einer Basisplatte, von dem sich ein zweiter Hohlzylinder erstreckt, welcher einen am zur Basisplatte entgegengesetzten Ende angeordneten Haken aufweist, der sich radial nach außen erstreckt, wobei der zweite Hohlzylinder derart konfiguriert ist, dass dieser zumindest teilweise in die Öffnung der Muffe einführbar ist, und bei einer Drehbewegung der Haken hinter den Sicherungsring der Muffe zur Sicherung des Stecker gegen einen Linearbewegung greift, wobei die Basisplatte des Steckers einen Vorsprung mit Kante aufweist, welche bei einer Drehbewegung in die Ausnehmung des Sicherungsring der Muffe zur Sicherung des Stecker gegen ein Verdrehen eingreift.

In einer weiteren Ausführungsform ist vorgesehen, dass zwischen einem Ende des Schlauchs und der Innenseite des ersten Hohlzylinders der Muffe ein Flansch mit einer Stirnseite angeordnet ist.

Weiterhin umfasst die vorliegende Erfindung eine Schlauchkupplung, bei dem der Flansch fest mit dem Schlauch zur Sicherung gegen ein Herausziehen des Schlauches aus der Muffe verbunden ist.

Es ist zudem vorgesehen, dass der zweite Hohlzylinder des Steckers an seiner Stirnseite eine Dichtung aufweist.

In einer weiteren Ausführungsform kann die Dichtung aus einem elastischen Material bestehen.

Ein weiterer Aspekt der Erfindung betrifft die Dichtung, welche ein O-Ring oder eine Flachdichtung sein kann.

In einer weiteren Ausführungsform der Schlauchkupplunggemäß der vorliegenden Erfindung weist der erste Hohlzylinder auf der entgegengesetzten Seite zum Sicherungsring einen Griff mit einer sich radial nach außen erstreckenden Grifffläche auf.

Ein weiterer Gegenstand der vorliegenden Erfindung betrifft ein Verfahren zur Verbindung einer Muffe und eines Steckers zur Erzeugung einer fluidischen Verbindung, umfassend die Schritte
- Bereitstellen einer Muffe, welche einen ersten Hohlzylinder umfasst, dessen Kanal an einem Ende mit einem Schlauch verbunden ist und dessen anderes Ende eine erste Öffnung zur Aufnahme eines Steckers umfasst, wobei das Ende zur Aufnahme des Steckers zumindest teilweise von einem Sicherungsring mit einer Ausnehmung umgeben ist, wobei sich die erste Öffnung der Muffe zur Aufnahme des Steckers an einer Seite in eine zweite Öffnung erstreckt, welche sich als entlang des Radius des ersten Hohlzylinders der Muffe verlaufender Kanal fortsetzt;
- Einführen des Steckers mit einer Basisplatte, von dem sich ein zweiter Hohlzylinder erstreckt, welcher einen am zur Basisplatte entgegengesetzten Ende angeordneten Haken aufweist, der sich radial nach außen erstreckt, wobei der zweite Hohlzylinder derart konfiguriert ist, dass dieser zumindest teilweise in die erste Öffnung der Muffe einführbar ist und der Haken derart konfiguriert ist, dass dieser vollständig in die zweite Öffnung der Muffe einführbar ist und bei einer Drehbewegung der Haken hinter den Sicherungsring der Muffe zur Sicherung des Stecker gegen einen Linearbewegung greift, wobei die Basisplatte des Steckers einen Vorsprung mit Kante aufweist, welche bei einer Drehbewegung in die Ausnehmung des Sicherungsring der Muffe zur Sicherung des Stecker gegen ein Verdrehen eingreift, in die Muffe;
- Drehung des Steckers in der Muffe zur Sicherung des Steckers gegen eine Linearbewegung mittels des Sicherungsrings
- Drehen des Steckers in der Muffe bis zum Einrasten der Kante der Basisplatte in der Ausnehmung des Sicherungsrings zur Sicherung des Steckers gegen ein Verdrehen.

Weitere Aspekte, Merkmale und Vorteile der vorliegenden Erfindung ergeben sich ohne weiteres aus der folgenden detaillierten Beschreibung, in der einfach bevorzugte Ausführungsformen und Implementierungen dargestellt sind. Die vorliegende Erfindung kann auch in anderen und unterschiedlichen Ausführungsformen verwirklicht werden und ihre verschiedenen Details können in verschiedenen, offensichtlichen Aspekten modifiziert werden, ohne Lehre und Umfang der vorliegenden Erfindung zu verlassen. Dementsprechend sind die Zeichnungen und Beschreibungen als veranschaulichend und nicht als einschränkend anzusehen. Zusätzliche Aufgaben und Vorteile der Erfindung werden teilweise in der folgenden Beschreibung dargelegt und werden teilweise aus der Beschreibung offensichtlich oder können der Ausführung der Erfindung entnommen werden.

### KURZE BESCHREIBUNG DER FIGUREN

Die Erfindung wird im Folgenden anhand von Figuren näher dargestellt. Dabei ist für den Fachmann offensichtlich, dass es sich nur um mögliche Ausführungsformen handelt, ohne dass die Erfindung auf die gezeigten Ausführungsformen beschränkt wird.
FIG. 1 zeigt eine perspektivische Darstellung beider Teile der Schlauchverbindung bevor der Stecker in die Muffe eingesteckt wird.
FIG. 2 zeigt eine perspektivische Darstellung beider Teile der Schlauchverbindung mit eingestecktem Stecker, wobei die Verbindung noch nicht gesichert oder geschlossen ist.
FIG. 3 zeigt eine perspektivische Darstellung beider Teile der Schlauchverbindung mit eingestecktem Stecker in einer gesicherten oder geschlossenen Verbindung.
FIG. 4 zeigt eine Seitenansicht beider Teile der Schlauchverbindung im verbundenen gesicherten Zustand.
FIG. 5 zeigt in einer perspektivischen Darstellung Stecker mit Haken, bevor dieser in die Muffe eingesteckt wird.
FIG. 6 zeigt Schnittzeichnung durch beide Teile der Schlauchverbindung im geschlossenen gesicherten Zustand.
FIG. 7 zeigt eine Schlauchkupplung gemäß der Erfindung an einem Pipettierer.

### AUSFÜHRLICHE BESCHREIBUNG DER ERFINDUNG

Die zuvor formulierte Aufgabe der Erfindung wird durch die Merkmale der unabhängigen Ansprüche gelöst. Die abhängigen Ansprüche decken weitere spezifische Ausführungsformen der Erfindung ab.

Die vorliegende Erfindung stellt eine Schlauchkupplung zur Verwendung bei fluidischen Verbindungen in Analysesystemen zur Verfügung. Die Verwendung in einem Analysesystem zeichnet sich dadurch aus, dass die Schläuche einen Außendurchmesser von maximal 10 mm haben. Die Schlauchkupplung besteht im Wesentlichen aus einer Muffe und einem Stecker, wobei beide Teile neuartig ausgeformt sind, um eine gesicherte Verbindung zu gewährleisten. Weiterhin weisen beide Teile Merkmale auf, welche ein visuelles Feedback über den Zustand der Verbindung geben.

Im Zusammenhang mit der Beschreibung der Erfindung wird die Muffe auch als äußeres Bauteil oder Außenteil bezeichnet. Der Stecker wird auch als inneres Teil oder Innenteil bezeichnet. Der Stecker kann auch Teil oder Anschluss einer Vorrichtung sein. Der verbundene Zustand bezeichnet einen Zustand, bei dem sich das Innenteil im Außenteil befindet. Innenteil und Außenteil werden über eine Drehbewegung in einen verbundenen gesicherten Zustand gebracht.

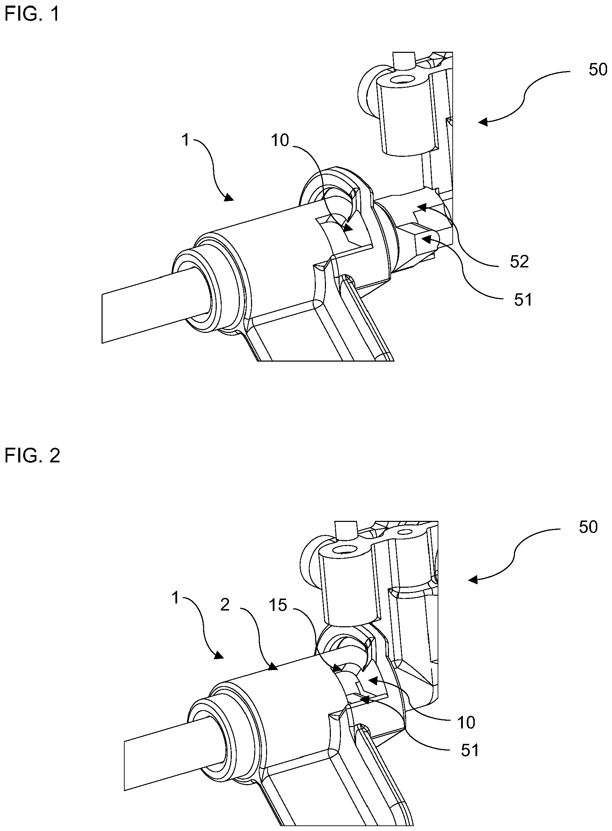

FIG. 1 zeigt eine perspektivische Darstellung der Schlauchverbindung mit Muffe 1 und Stecker 50, bevor der Stecker 50 in die Muffe 1 geschoben wird. Der Stecker 50 weist einen Haken 51 auf, welcher in Öffnung 10 der Muffe 1 eingeschoben wird. Weiterhin weist der Stecker 50 einen Hohlzylinder 52 mit einem zentralen Kanal (nicht sichtbar) zur Aufnahme von Fluiden auf.

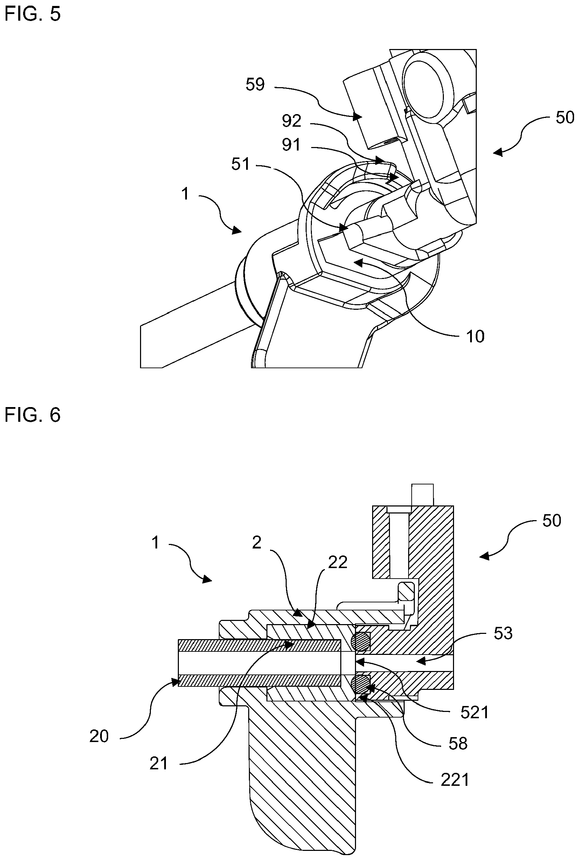

FIG. 2 zeigt den Zustand, wenn der Stecker 50 mit Haken 51 in Muffe 1 bzw. Öffnung 10 eingeschoben ist. Weiterhin wird der Hohlzylinder 52 bei der Verbindung beider Teile 1, 50 teilweise in den Hohlzylinder 2 der Muffe 1 eingeschoben (vgl. FIG. 6). Die beiden Teile 1, 50 sind in FIG. 2 aber noch nicht durch eine Drehbewegung in einen geschlossenen gesicherten Zustand gebracht worden.

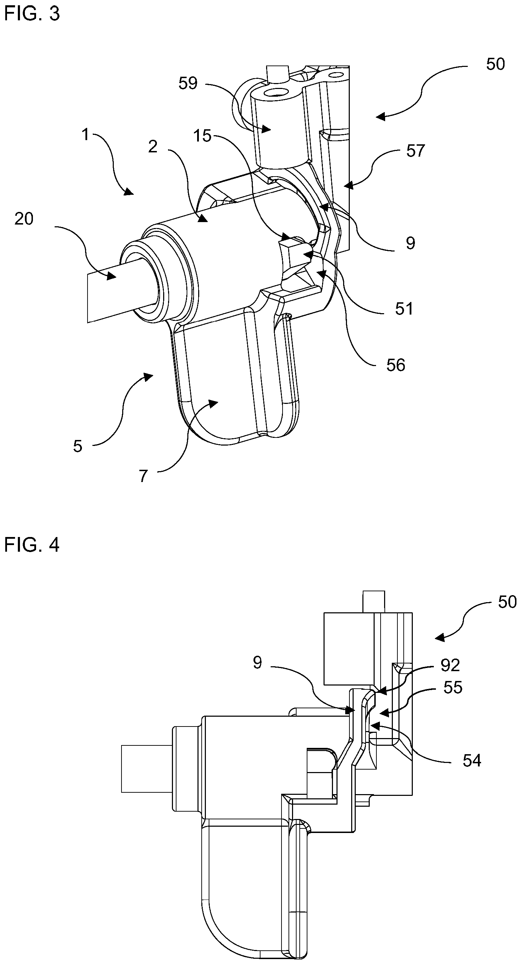

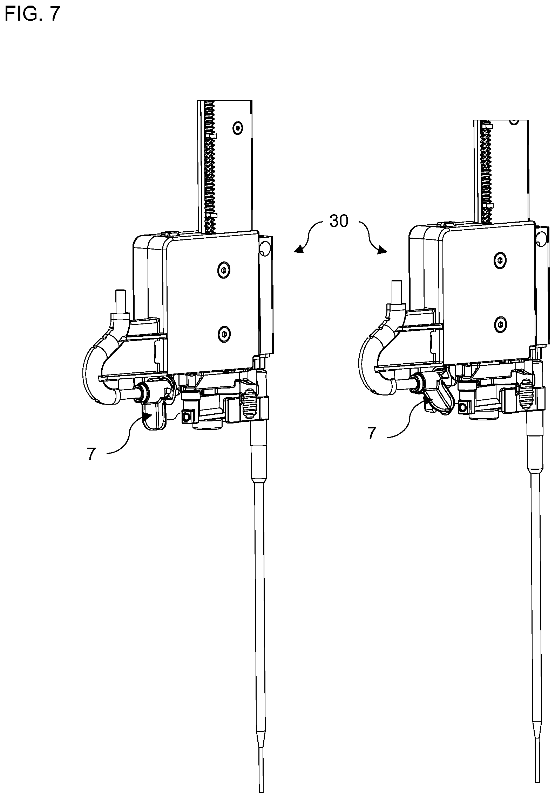

FIG. 3 zeigt eine perspektivische Darstellung der Schlauchverbindung mit beiden Teilen 1, 50 im verbundenen gesicherten Zustand. Die Muffe 1 besteht im Wesentlichen aus einem Hohlzylinder 2 mit einem Griff 5 in Form einer sich radial von der Außenseite des Zylinders erstreckenden Fläche 7. Die Stellung der Fläche 7 in Bezug zur Basisplatte 57 des Steckers 50 zeigt an, ob sich die beiden Teile 1, 50 in einem verbundenen gesicherten Zustand befinden (FIG. 7, linker Teil) oder ob der Stecker 50 nur in die Muffe 1 eingeschoben ist, ohne dass durch eine Drehbewegung eine gesicherte Verbindung hergestellt wurde (FIG. 7, rechter Teil). Der Hohlzylinder 2 von Muffe 1 der Schlauchkupplung ist fest mit einem Schlauch 20 verbunden.

Der Hohlzylinder 2 von Muffe 1 weist an dem offenen Ende zur Aufnahme des Steckers 50 einen dieses Ende teilweise umgebenden Sicherungsring 9 auf, welcher in Bezug auf den Außenumfang des Hohlzylinders 2 auf der gegenüberliegenden Seite des Schlauchanschlusses angeordnet ist. Sicherungsring 9 weist in Richtung des Steckers 50 eine Ausnehmung 91 auf (vgl. FIG. 5), welche im verbundenen gesicherten Zustand (FIG. 3) an dem Vorsprung 54 der Kante 55 des Steckers 50 einrastet (vgl. FIG. 4). Ausnehmung 91 ist auf einer Seite von Vorsprung 92 flankiert, welcher das Einrasten des Vorsprungs 54 in der Ausnehmung 91 zum Erreichen einer festen, aber reversiblen Verbindung, ermöglicht (siehe auch FIG. 5). Mit Vorsprung 92 wird ein ungewolltes Losdrehen der Verbindung verhindert, da einerseits Vorsprung 92 an der Kante 55 des Vorsprungs 54 anliegt, und andererseits Haken 51 ein Weiterdrehen verhindert. Somit wird die Verbindung durch die Kombination von Vorsprung 92 und Haken 51 fest, aber reversibel fixiert.

Haken 51 des Steckers 50 wird durch die Drehbewegung vor Sicherungsfläche 56 gedreht, so dass der Haken am Ende von Kanal 15 (vgl. FIG. 3) von drei Seiten des Kanals umgeben ist, so dass Haken 51 nicht mehr aus der Muffe 1 gezogen werden kann und damit insgesamt ein Herausziehen des Steckers 50 aus der Muffe 1 ausgeschlossen ist. Zudem verursacht Haken 51 nach der Drehung vor Sicherungsfläche 56 einen Anpressdruck zwischen Dichtfläche oder einer Flachdichtung und O-Ring, wodurch dieser komprimiert wird und die Verbindung somit sicher abgedichtet wird.

FIG. 5 zeigt in einer perspektivischen Darstellung Stecker 50 mit Haken 51, bevor dieser in die Muffe eingesteckt wird. Es ist offensichtlich, dass der Zylinder 59 auch eine andere geometrische Form aufweisen kann, damit dieser zur Anzeige des Status der Verbindung beider Teile geeignet ist.

FIG. 6 zeigt in einem Querschnitt Muffe 1 und Stecker 50 im verbundenen gesicherten Zustand. Die Muffe 1 ist am gegenüberliegenden Ende zu dem mit dem Stecker 50 verbundenen Ende mit einem Schlauch 20 verbunden. Zwischen Schlauchende 21 und dem Hohlzylinder 2 der Muffe 1 ist ein Flansch 22 angeordnet, dessen Stirnseite 221 als Dichtfläche für eine elastische Dichtung 58 in der Stirnseite 521 des Hohlzylinders 52 des Steckers 50. Durch eine Ausführungsform mit Flansch 22 und elastischer Dichtung 58 wird eine zuverlässige Abdichtung des Übergangs von Schlauch 20 in den Kanal 53 des Hohlzylinders des Steckers 50 gewährleistet. Ein weiterer Vorteil des Flansches ist, dass dieser sicherstellt, dass sich der Schlauch beim Verschließen der Verbindung nicht verdreht.

FIG. 7 zeigt eine Schlauchkupplung gemäß der vorliegenden Offenbarung als Teil eines Pipettierers 30. In diesem konkreten Anwendungsbeispiel ist es vorteilhaft, wenn ein Nutzer durch die Stellung der Fläche 7 unmittelbar erkennen kann, ob der Anschluss sich in einem festen, gesicherten Zustand befindet oder offen ist. Im linken Teil von FIG. 7 ist der Anschluss fest, gesichert. Im rechten Teil von FIG. 7 ist die Fläche 7 verdreht oder angewinkelt und somit ist die Verbindung nicht gesichert in dem Sinn, dass diese dicht ist.

Die Vorteile einer Schlauchverbindung gemäß der vorliegenden Erfindung können wie folgt zusammengefasst werden:
- Im Gegensatz zu einer Schraubverbindung mit Gewinde, ist die Verbindung der Teile unabhängig von einem Anzugsdrehmoment.
- Die Stellung von Muffe und Stecker zueinander bzw. der Fahne an der Muffe gibt direkt Aufschluss darüber, ob die Verbindung geschlossen oder offen ist.
- Muffe und Stecker können durch einfache Verfahren, z.B. Spritzgussverfahren hergestellt werden.
- Die geschlossene Verbindung ist mechanisch gesichert.

Die vorstehende Beschreibung der bevorzugten Ausführungsform der Erfindung wurde zum Zweck der Veranschaulichung und Beschreibung gegeben. Es ist nicht beabsichtigt, erschöpfend zu sein oder die Erfindung genau auf die offenbarte Form zu beschränken. Modifikationen und Variationen sind angesichts der obigen Lehre möglich oder können aus der Praxis der Erfindung erlangt werden. Die Ausführungsform wurde gewählt und beschrieben, um die Prinzipien der Erfindung und ihre praktische Anwendung zu erläutern, um es dem Fachmann zu ermöglichen, die Erfindung in verschiedenen Ausführungsformen zu verwenden, die für die spezielle beabsichtigte Verwendung geeignet sind. Der Umfang der Erfindung wird durch die beigefügten Ansprüche definiert.

### BEZUGSZEICHEN

- 1: Muffe
- 2: Hohlzylinder Muffe
- 5: Griff
- 7: Fläche
- 9: Sicherungsring
- 10: Öffnung
- 15: Kanal
- 20: Schlauch
- 21: Schlauchende
- 22: Flansch
- 221: Stirnseite Flansch
- 30: Pipettierer
- 50: Stecker
- 51: Haken
- 52: Hohlzylinder Stecker
- 53: Kanal Hohlzylinder
- 54: Vorsprung
- 55: Kante
- 56: Sicherungsfläche
- 57: Basisplatte
- 58: Dichtung
- 59: Zylinder
- 91: Ausnehmung Sicherungsring
- 92: Vorsprung
- 521: Stirnseite Hohlzylinder

## Patentansprüche

1. Eine Schlauchkupplung für eine fluidische Verbindung in einem Analysesystem, umfassend
- einen Stecker (50)
- eine Muffe (1), welche einen ersten Hohlzylinder (2) umfasst, dessen Kanal (15) an einem Ende (21) mit einem Schlauch (20) verbunden ist und dessen anderes Ende eine erste Öffnung (10) zur Aufnahme des Steckers (50) umfasst, wobei das Ende zur Aufnahme des Steckers (50) zumindest teilweise von einem Sicherungsring (9) mit einer Ausnehmung umgeben ist, wobei sich die erste Öffnung (10) der Muffe (1) zur Aufnahme des Steckers (50) an einer Seite in eine zweite Öffnung erstreckt, welche sich als entlang des Radius des ersten Hohlzylinders (2) verlaufender Kanal (15) fortsetzt; und
- den Stecker(50) mit einer Basisplatte (57), von dem sich ein zweiter Hohlzylinder (52) erstreckt, welcher einen am zur Basisplatte (57) entgegengesetzten Ende angeordneten Haken (51) aufweist, der sich radial nach außen erstreckt, wobei der zweite Hohlzylinder (52) derart konfiguriert ist, dass dieser zumindest teilweise in die erste Öffnung (10) der Muffe (1) einführbar ist und der Haken (51) derart konfiguriert ist, dass dieser vollständig in die zweite Öffnung der Muffe (1) einführbar ist und bei einer Drehbewegung der Haken (51) hinter den Sicherungsring (9) der Muffe (1) zur Sicherung des Steckers (50) gegen einen Linearbewegung greift, wobei die Basisplatte (57) des Steckers (50) einen Vorsprung (54) mit Kante (55) aufweist, welche bei einer Drehbewegung in die Ausnehmung (91) des Sicherungsrings (9) der Muffe (1) zur Sicherung des Steckers (50) gegen ein Verdrehen eingreift.

2. Die Schlauchkupplung nach Anspruch 1, wobei zwischen einem Ende des Schlauchs (20) und der Innenseite des ersten Hohlzylinders (2) der Muffe (1) ein Flansch (22) mit einer Stirnseite (221) angeordnet ist.

3. Die Schlauchkupplung nach Anspruch 1 oder 2, wobei der Flansch (22) fest mit dem Schlauch (20) zur Sicherung gegen ein Herausziehen des Schlauches (20) aus der Muffe (1) verbunden ist.

4. Die Schlauchkupplung nach einem der Ansprüche 1 bis 3, wobei der zweiten Hohlzylinders (52) des Steckers (50) an seiner Stirnseite (521) eine Dichtung (58) aufweist.

5. Die Schlauchkupplung nach Anspruch 4, wobei die Dichtung (58) aus einem elastischen Material besteht.

6. Die Schlauchkupplung nach Anspruch 4 oder 5, wobei die Dichtung (58) ein O-Ring oder eine Flachdichtung ist.

7. Die Schlauchkupplung nach einem der Ansprüche 1 bis 6, wobei der erste Hohlzylinder (2) auf der entgegengesetzten Seite zum Sicherungsring (9) einen Griff (5) mit einer sich radial nach außen erstreckenden Grifffläche aufweist.

8. Ein Verfahren zur Verbindung einer Muffe (1) und eines Steckers (50) zur Erzeugung einer fluidischen Verbindung, umfassend die Schritte
- Bereitstellen einer Muffe (1), welche einen ersten Hohlzylinder (2) umfasst, dessen Kanal (15) an einem Ende mit einem Schlauch (20) verbunden ist und dessen anderes Ende eine erste Öffnung (10) zur Aufnahme eines Steckers (50) umfasst, wobei das Ende zur Aufnahme des Steckers (50) zumindest teilweise von einem Sicherungsring (9) mit einer Ausnehmung umgeben ist, wobei sich die erste Öffnung (10) der Muffe (1) zur Aufnahme des Steckers (50) an einer Seite in eine zweite Öffnung erstreckt, welche sich als entlang des Radius des ersten Hohlzylinders (2) der Muffe (1) verlaufender Kanal (15) fortsetzt;
- Einführen des Steckers (50) mit einer Basisplatte (57), von dem sich ein zweiter Hohlzylinder (52) erstreckt, welcher einen am zur Basisplatte (57) entgegengesetzten Ende angeordneten Haken (51) aufweist, der sich radial nach außen erstreckt, wobei der zweite Hohlzylinder (52) derart konfiguriert ist, dass dieser zumindest teilweise in die erste Öffnung (10) der Muffe (1) einführbar ist und der Haken (51) derart konfiguriert ist, dass dieser vollständig in die zweite Öffnung der Muffe (1) einführbar ist und bei einer Drehbewegung der Haken (51) hinter den Sicherungsring (9) der Muffe (1) zur Sicherung des Stecker gegen einen Linearbewegung greift, wobei die Basisplatte (57) des Steckers (50) einen Vorsprung (54) mit Kante (55) aufweist, welche bei einer Drehbewegung in die Ausnehmung des Sicherungsrings (9) der Muffe (1) zur Sicherung des Steckers (50) gegen ein Verdrehen eingreift;
- Drehung des Steckers (50) in der Muffe (1) zur Sicherung des Steckers (50) gegen eine Linearbewegung mittels des Sicherungsrings (9);
- Drehen des Steckers (50) in der Muffe (1) bis zum Einrasten der Kante (55) der Basisplatte in der Ausnehmung des Sicherungsrings (9) zur Sicherung des Steckers (50) gegen ein Verdrehen.

## Claims

1. A hose coupling for a fluidic connection in an analyser system, comprising
- a plug (50);
- a sleeve (1) which comprises a first hollow cylinder (2) whose channel (15) is connected at one end (21) to a hose (20) and whose other end comprises a first opening (10) for receiving the plug (50), wherein the end for receiving the plug (50) is at least partially surrounded by a retaining ring (9) with a recess, wherein the first opening (10) of the sleeve (1) for receiving the plug (50) extends on one side into a second opening which continues as a channel (15) extending along the radius of the first hollow cylinder (2); and
- the plug (50) with a base plate (57), from which a second hollow cylinder (52) extends, which has a hook (51) arranged at the end opposite the base plate (57), which hook extends radially outwards, wherein the second hollow cylinder (52) is configured in such a way that it can be at least partially inserted into the first opening (10) of the sleeve (1) and the hook (51) is configured in such a way that it can be completely inserted into the second opening of the sleeve (1) and, during a rotary movement, the hook (51) can be inserted behind the securing ring (9) of the sleeve (1) to secure the plug (50), that it can be inserted completely into the second opening of the sleeve (1) and, during a rotary movement, the hook (51) engages behind the retaining ring (9) of the sleeve (1) to secure the plug (50) against linear movement, wherein the base plate (57) of the plug (50) has a projection (54) with an edge (55) which, during a rotary movement, engages in the recess (91) of the retaining ring (9) of the sleeve (1) to secure the plug (50) against twisting.

2. The hose coupling according to claim 1, wherein a flange (22) with an end face (221) is arranged between one end of the hose (20) and the inside of the first hollow cylinder (2) of the sleeve (1).

3. The hose coupling according to claim 1 or 2, wherein the flange (22) is firmly connected to the hose (20) to prevent the hose (20) from being pulled out of the sleeve (1).

4. The hose coupling according to any one of claims 1 to 3, wherein the second hollow cylinder (52) of the plug (50) has a seal (58) on its end face (521).

5. The hose coupling according to claim 4, wherein the seal (58) is made of a resilient material.

6. The hose coupling according to claim 4 or 5, wherein the seal (58) is an O-ring or a flat seal.

7. The hose coupling according to any one of claims 1 to 6, wherein the first hollow cylinder (2) has a handle (5) with a radially outwardly extending gripping surface on the opposite side to the retaining ring (9).

8. A method of connecting a sleeve (1) and a plug (50) to create a fluidic connection, comprising the steps of
- Providing a sleeve (1) which comprises a first hollow cylinder (2) whose channel (15) is connected at one end to a hose (20) and whose other end comprises a first opening (10) for receiving a plug (50), wherein the end for receiving the plug (50) is at least partially surrounded by a retaining ring (9) with a recess, wherein the first opening (10) of the sleeve (1) for receiving the plug (50) extends on one side into a second opening which continues as a channel (15) extending along the radius of the first hollow cylinder (2) of the sleeve (1);
- Insertion of the plug (50) with a base plate (57), from which a second hollow cylinder (52) extends, which has a hook (51) arranged at the end opposite the base plate (57), which hook extends radially outwards, wherein the second hollow cylinder (52) is configured in such a way that it can be inserted at least partially into the first opening (10) of the sleeve (1) and the hook (51) is configured in such a way that it can be inserted completely into the second opening of the sleeve (1) and, during a rotary movement, the hook (51) can be inserted behind the securing ring (9) of the sleeve (1) to secure the plug against linear movement, that it can be inserted completely into the second opening of the sleeve (1) and, during a rotary movement, the hook (51) engages behind the retaining ring (9) of the sleeve (1) to secure the plug against linear movement, wherein the base plate (57) of the plug (50) has a projection (54) with an edge (55) which, during a rotary movement, engages in the recess of the retaining ring (9) of the sleeve (1) to secure the plug (50) against twisting;
- Rotation of the plug (50) in the sleeve (1) to secure the plug (50) against linear movement by means of the retaining ring (9);
- Turn the plug (50) in the sleeve (1) until the edge (55) of the base plate engages in the recess of the retaining ring (9) to secure the plug (50) against twisting.

## Revendications

1. Un raccord de tuyau pour une connexion fluidique dans un système d'analyse, comprenant
- une fiche (50) ;
- un manchon (1) qui comprend un premier cylindre creux (2) dont le canal (15) est relié à une extrémité (21) à un tuyau flexible (20) et dont l'autre extrémité comprend une première ouverture (10) pour recevoir la fiche (50), l'extrémité destinée à recevoir la fiche (50) étant au moins partiellement entourée d'une bague de sécurité (9) avec un évidement, la première ouverture (10) du manchon (1) destinée à recevoir la fiche (50) s'étendant sur un côté dans une deuxième ouverture qui se prolonge par un canal (15) s'étendant le long du rayon du premier cylindre creux (2) ; et
- la fiche (50) avec une plaque de base (57), à partir de laquelle s'étend un deuxième cylindre creux (52), qui présente un crochet (51) disposé à l'extrémité opposée à la plaque de base (57), qui s'étend radialement vers l'extérieur, le deuxième cylindre creux (52) étant configuré de telle sorte qu'il peut être introduit au moins partiellement dans la première ouverture (10) du manchon (1) et le crochet (51) étant configuré de telle sorte, que celui-ci peut être introduit complètement dans la deuxième ouverture du manchon (1) et que, lors d'un mouvement de rotation, le crochet (51) s'engage derrière la bague de sécurité (9) du manchon (1) pour bloquer le connecteur (50) contre un mouvement linéaire, la plaque de base (57) du connecteur (50) présentant une saillie (54) avec un bord (55) qui, lors d'un mouvement de rotation, s'engage dans l'évidement (91) de la bague de sécurité (9) du manchon (1) pour bloquer le connecteur (50) contre une rotation.

2. Le raccord de tuyau selon la revendication 1, dans lequel une bride (22) avec une face frontale (221) est disposée entre une extrémité du tuyau (20) et la face intérieure du premier cylindre creux (2) du manchon (1).

3. Le raccord de tuyau selon la revendication 1 ou 2, dans lequel la bride (22) est reliée de manière fixe au tuyau (20) pour empêcher le tuyau (20) d'être retiré du manchon (1).

4. Le raccord de tuyau selon l'une des revendications 1 à 3, dans lequel le deuxième cylindre creux (52) du connecteur (50) comporte un joint d'étanchéité (58) sur sa face frontale (521).

5. Le raccord de tuyau selon la revendication 4, dans lequel le joint (58) est constitué d'un matériau élastique.

6. Le raccord de tuyau selon la revendication 4 ou 5, dans lequel le joint (58) est un joint torique ou un joint plat.

7. Le raccord de tuyau selon l'une quelconque des revendications 1 à 6, dans lequel le premier cylindre creux (2) comporte, du côté opposé à la bague de sécurité (9), une poignée (5) ayant une surface de préhension s'étendant radialement vers l'extérieur.

8. Un procédé de connexion d'un manchon (1) et d'une fiche (50) pour créer une connexion fluidique, comprenant les étapes consistant à
- Fournir un manchon (1) comprenant un premier cylindre creux (2) dont le canal (15) est relié à une extrémité à un tuyau flexible (20) et dont l'autre extrémité comprend une première ouverture (10) pour recevoir une fiche (50), l'extrémité pour recevoir la fiche (50) étant au moins partiellement entourée d'une bague de sécurité (9) avec un évidement, la première ouverture (10) du manchon (1) destinée à recevoir la fiche (50) s'étend sur un côté dans une deuxième ouverture qui se prolonge par un canal (15) s'étendant le long du rayon du premier cylindre creux (2) du manchon (1) ;
- Introduction de la fiche (50) avec une plaque de base (57) à partir de laquelle s'étend un deuxième cylindre creux (52) qui présente un crochet (51) disposé à l'extrémité opposée à la plaque de base (57) et qui s'étend radialement vers l'extérieur, le deuxième cylindre creux (52) étant configuré de telle sorte qu'il peut être introduit au moins partiellement dans la première ouverture (10) du manchon (1) et le crochet (51) étant configuré de telle sorte qu'il peut être introduit complètement dans la deuxième ouverture du manchon (1) et que, lors d'un mouvement de rotation, le crochet (51) s'engage derrière la bague de sécurité (9) du manchon (1) pour bloquer le connecteur contre un mouvement linéaire, la plaque de base (57) du connecteur (50) présentant une saillie (54) avec un bord (55) qui, lors d'un mouvement de rotation, s'engage dans l'évidement de la bague de sécurité (9) du manchon (1) pour bloquer le connecteur (50) contre une rotation ;
- rotation de la fiche (50) dans le manchon (1) pour bloquer la fiche (50) contre un mouvement linéaire au moyen de la bague de sécurité (9) ;
- Tourner la fiche (50) dans le manchon (1) jusqu'à ce que le bord (55) de la plaque de base s'enclenche dans l'évidement de la bague de sécurité (9) pour empêcher la fiche (50) de tourner.
